# EUROPEAN PATENT SPECIFICATION

(11) **EP 1 681 210 B1**
(45) Date of publication and mention of the grant of the patent: **04.07.2007**
(21) Application number: 06000418.1
(22) Date of filing: 10.01.2006
(51) Int. Cl.: B60R 21/26

(54) **Multi-stage gas generator**
Mehrstufengasgenerator
Générateur de gaz à plusieurs niveaux

(30) Priority: 14.01.2005 JP 2005007080
(43) Date of publication of application: 19.07.2006
(73) Proprietor: DAICEL CHEMICAL INDUSTRIES, LTD., Sakai-shi, Osaka (JP)
(72) Inventor: Matsuda, Naoki, Himeji-shi, Hyogo (JP); Katsuda, Nobuyuki, Himeji-shi, Hyogo (JP); Yabuta, Mikio, Himeji-shi, Hyogo (JP); Hatomoto, Atsushi, Himeji-shi, Hyogo (JP)
(74) Representative: Grünecker, Kinkeldey, Stockmair & Schwanhäusser Anwaltssozietät

(56) References cited:
- EP-A- 1 234 732
- DE-A1- 3 900 930
- US-A- 5 286 054
- US-A1- 2003 071 447

## Description

### BACKGROUND OF THE INVENTION

### Field of the Invention

The present invention relates to a multi-stage gas generator for an air bag.

### Description of the Related Arts

Air bags for vehicles such as automobiles are used in a wide variety of applications such as air bags for protecting the head, chest, waist, and knees of a passenger, and curtain air bags provided on the side windows of the vehicle. However, the interior space of the vehicle is restricted, and in many cases it is impossible to install a gas generator for each application. Hence, it has become important to achieve a reduction in the size of the gas generator so that air bags for a wide variety of applications can be inflated effectively in restricted locations.

A gas generator is disposed in the interior of the vehicle after it is accommodated in a module case together with the air bag. However, the shape of the module case may vary according to the vehicle type, disposal location, and so on.

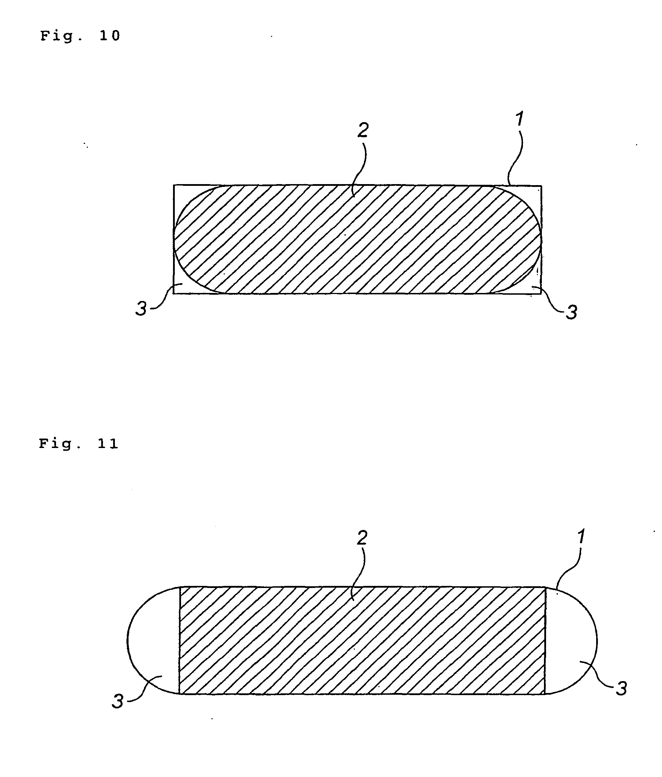

A conventional relationship between a module case and a gas generator is shown in Figs. 10 and 11. As shown in Figs. 10 and 11, when a module case 1 and a gas generator 2 have different shapes, unused dead space 3 occurs wastefully. In the example shown in Fig. 10, if the plane form of the gas generator 2 is made rectangular and aligned with the interior shape of the module case 1 so as to eliminate the dead space 3, the width of the gas generator 2 can be reduced while maintaining its volume, and hence the width of the module case 1 can be reduced correspondingly. As a result, an overall reduction in size can be achieved.

However, when the air bag system is activated, the interior of a gas generator which uses a gas generating agent as a gas source enters a high-pressure state, and therefore high pressure resistance is demanded of a housing serving as an outer shell container. This also applies when an inert gas or the like charged at high pressure is used as the gas source, and hence the shape of the housing cannot always be selected freely.

Conventional arts relating to the present invention include JP-A No. 11-139241, US-B No. 5,658,010, JP-A No. 10-181517 and JP-A No. 3-175298.

A multistage airbag according to the preamble of claim 1 is known from US 20030071447

### SUMMARY OF THE INVENTION

The present invention provides a multi-stage gas generator for an air bag, comprising:
a plurality of gas generators each having an inside housing provided with an inside gas discharge port as an outer shell container,
a filter disposed on the exterior of the plurality of gas generators and
an outside housing of a desired shape surrounding the plurality of gas generators and the filter and being provided with an outside gas discharge port,
the pressure resistance of the inside housing being greater than the pressure resistance of the outside housing,
gas discharged through the inside gas discharge port of the inside housing upon activation of the multi-stage gas generator, passing through the filter, then being discharged through the outside gas discharge port of the outside housing to inflate the air bag.

### Brief Description of the Drawings

The present invention will become more fully understood from the detailed description given hereinbelow and the accompanying drawings which are given by way of illustration only, and thus are not limitative of the present invention and wherein:
Fig. 1 shows a plan view (with the ceiling surface removed) of a multi-stage gas generator for an air bag;
Fig. 2 shows a front view of the multi-stage gas generator shown in Fig. 1;
Fig. 3 shows a plan view (with the ceiling surface removed) of a multi-stage gas generator for an air bag in a different embodiment;
Fig. 4 shows a side view (with the side face removed) of the multi-stage gas generator shown in Fig. 3;
Fig. 5 shows a plan view (with the ceiling surface removed) of a multi-stage gas generator for an air bag in a different embodiment;
Fig. 6 shows a side view (with the side face removed) of the multi-stage gas generator shown in Fig. 5;
Fig. 7 shows a side view (with the side face removed) of a multi-stage gas generator in a different embodiment to that of the multi-stage gas generator for an air bag shown in Fig. 8;
Fig. 8 shows a plan view of a multi-stage gas generator for an air bag in a different embodiment;
Fig. 9(a) shows a side view of the multi-stage gas generator for an air bag shown in Fig. 8, and Fig. 9(b) shows a plan view (with the ceiling surface removed) of the multi-stage gas generator for an air bag shown in Fig. 8;
Fig. 10 shows an illustrative view of the prior art; and
Fig. 11 shows an illustrative view of the prior art.

### Detailed description of the invention

The present invention provides a multi-stage gas generator for an air bag which can be applied to gas generators for various types of air bags, and can contribute to a reduction in the overall size of an air bag system.

When the inside housing, which serves as the outer shell container of the gas generator, includes a gas generating agent as a gas source, the interior thereof increases in pressure as a result of the gas that is generated upon activation of the multi-stage gas generator. Hence, if the inside housing deforms before the gas generating agent has burned fully or before the gas has been discharged completely from the gas generator, the gas generating agent may not burn sufficiently or be discharged sufficiently.

Moreover, when an inert gas charged at high pressure is used as the gas source, high pressure resistance is required of the inside housing even prior to activation. If the inside housing deforms prior to activation, a malfunction may occur, or a normal operation may be impossible.

To ensure that the gas generator operates normally, the inside housing should have high pressure resistance. On the other hand, the gas that is discharged from the gas generator is discharged into the air bag from the outside housing immediately, and therefore the pressure increase in the outside housing is not as great as the pressure increase in the inside housing. Accordingly, slight deformation of the outside housing caused by the increase in pressure is not problematic as long as gas discharge is not inhibited.

Hence, with the structure of the gas generator according to the present invention, combining the inside housing and outside housing, the shape of the outside housing can be modified easily, and more specifically, the shape of the outside housing can be modified in accordance with the shape of a module case for accommodating the multi-stage gas generator for an air bag.

Since the shape of the outside housing can be modified in accordance with the shape of the module case in this manner, the shape of the outside housing can be matched specifically to the interior shape of the module case, and as a result, no dead space occurs between the module case and outside housing.

In the multi-stage gas generator for an air bag according to the present invention, the maximum pressure received by the inside housing upon activation of the multi-stage gas generator for an air bag is preferably between 3 and 120MPa, and the strength of the inside housing is preferably between 4.5 and 180MPa. Meanwhile, the maximum pressure received by the outside housing upon activation of the multi-stage gas generator for an air bag is preferably between 0.1 and 5MPa, and the strength of the outside housing is preferably between 0.15 and 7.5MPa.

In the multi-stage gas generator for an air bag according to the present invention, the plurality of gas generators may include at least one of a gas generating agent and a pressurized gas as a gas generating source.

In the multi-stage gas generator for an air bag according to the present invention, the shape of the multi-stage gas generator can be modified in accordance with the shape of the module. Therefore, the multi-stage gas generator and module case can be reduced in size and weight, thereby contributing to reductions in the overall size and weight of an air bag system.

The present invention relates to a multi-stage gas generator for an air bag, which enables a reduction in the overall size of an air bag system.

### Embodiments of the Invention

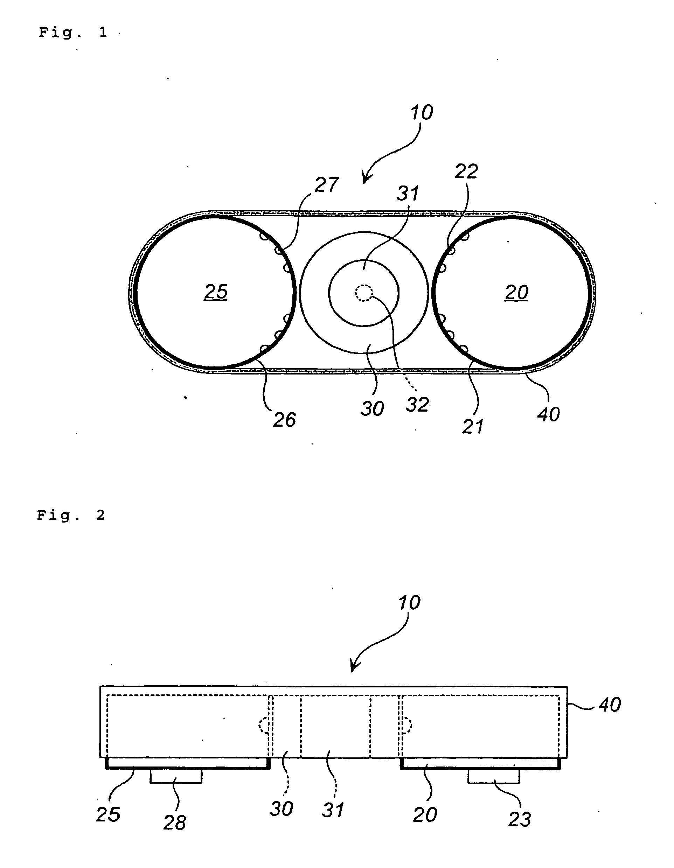

### (1) Multi-stage gas generator of Figs. 1, 2

Fig. 1 is a plan view of a multi-stage gas generator 10 for an air bag (note, however, that a ceiling portion thereof has been removed so that the interior is visible), and Fig. 2 is a front view of Fig. 1.

A first gas generator 20 has a first inside housing 21 serving as an outer shell container, and a plurality of first inside gas discharge ports 22 are provided in the first inside housing 21. An ignition device 23 including an igniter and a transfer charge is accommodated in the interior of the first inside housing 21 together with a gas generating agent.

A second gas generator 25 has a second inside housing 26 serving as an outer shell container, and a plurality of second inside gas discharge ports 27 are provided in the second inside housing 26. An ignition device 28 including an igniter and a transfer charge is accommodated in the interior of the second inside housing 26 together with a gas generating agent.

Gas generators having well-known structures and functions (with no filter in the interior thereof or with the filter removed) may be used as the first gas generator 20 and second gas generator 25. Further, each gas generator has a single ignition device, and at least one or two or more combustion chambers may be provided.

A cylindrical filter 30 having a function for cooling and filtering the high-temperature gas that is generated through combustion of the gas generating agent is disposed between the first gas generator 20 and second gas generator 25.

The first gas generator 20, second gas generator 25, and cylindrical filter 30 are surrounded by an outside housing 40. The two end surfaces of the cylindrical filter 30 abut against the ceiling surface and bottom surface of the outside housing 40 respectively, and an outside gas discharge port 32 is provided in the ceiling surface and bottom surface so as to face a hollow portion 31 of the cylindrical filter 30. One or more outside gas discharge ports 32 may be provided in each surface side, and to ensure moisture resistance, the outside gas discharge port 32 is preferably sealed by sealing tape.

A plane form of the first inside housing 21 and second inside housing 26 is circular, while a plane form of the outside housing 40 is elliptical. As shown in the drawings, a half arc of the first inside housing 21 and second inside housing 26 matches the arc part of the outside housing 40 in both shape and size.

The first inside housing 21 and second inside housing 26 are sufficiently pressure resistant to be able to withstand the pressure increase generated upon activation of the multi-stage gas generator 10. On the other hand, the pressure resistance of the outside housing 40 is lower than that of the two inside housings, and it is acceptable for the outside housing 40 to be deformed by the pressure increase generated upon activation of the multi-stage gas generator 10, provided that gas discharge through the outside gas discharge port 32 is not obstructed.

The maximum pressure received by the first inside housing 21 and second inside housing 26 upon activation of the multi-stage gas generator 10 is preferably between 3 and 120MPa, and more preferably between 5 and 120MPa. Accordingly, the strength of the first inside housing 21 and second inside housing 26 is preferably between 4.5 and 180MPa, and more preferably between 7.5 and 180MPa.

The maximum pressure received by the outside housing upon activation of the multi-stage gas generator 10 is preferably between 0.1 and 5MPa, more preferably between 0.1 and 3MPa, and even more preferably between 0.1 and 1MPa. Accordingly, the strength of the outside housing is preferably between 0.15 and 7.5MPa, more preferably between 0.15 and 4.5MPa, and even more preferably between 0.15 and 1.5MPa.

There are no particular limitations on the material used for the inside housings and outside housing, and as long as the desired strengths are satisfied, a well-known material such as iron, aluminum, stainless steel, synthetic resin, and so on may be selected.

Next, an operation of an air bag system incorporated with the multi-stage gas generator 10 will be described with reference to Figs. 1 and 2. Depending on the manner of the vehicle collision, the two gas generators are activated in three patterns: simultaneous activation; activation of the first gas generator 20 first and the second gas generator 25 at a delay; and activation of the first gas generator 20 alone (note, however, that for safety purposes during demolition of the vehicle, the second gas generator 25 is also activated at a timing that does not contribute to air bag inflation). The simultaneous activation pattern will be described below.

In the air bag system, the multi-stage gas generator 10 is accommodated in a module case together with an air bag and disposed in a predetermined position within the vehicle. In this case, the shape of the module case is limited by the restrictions of the disposal location, but in this embodiment, the exterior shape of the multi-stage gas generator 10 can be matched to the interior shape of the module case, thereby eliminating dead space, and hence corresponding reductions in size and weight can be achieved.

In the first gas generator 20 and the second gas generator 25, when the respective ignition devices 23, 28 thereof are activated, the gas generating agent is ignited and burned, generating gas which is discharged through the first inside gas discharge ports 22 and second inside gas discharge ports 27. In this process, the internal pressure of the first inside housing 21 and second inside housing 26 rises high, but since the inside housings are highly pressure resistant, the two housings do not deform.

The combustion gas flows through the cylindrical filter 30 into the hollow portion 31, and is discharged through the outside gas discharge ports 32 to inflate the air bag. In this process, combustion gas enters the outside housing 40, but since the gas is quickly discharged through the outside gas discharge ports 32, an excessive increase in the internal pressure is avoided. Moreover, even if the outside housing 40 deforms due to an increase in the internal pressure, the ceiling surface and bottom surface of the outside housing 40 are supported by the cylindrical filter 30, and therefore a gas discharge path to the outside gas discharge ports 32 is secured.

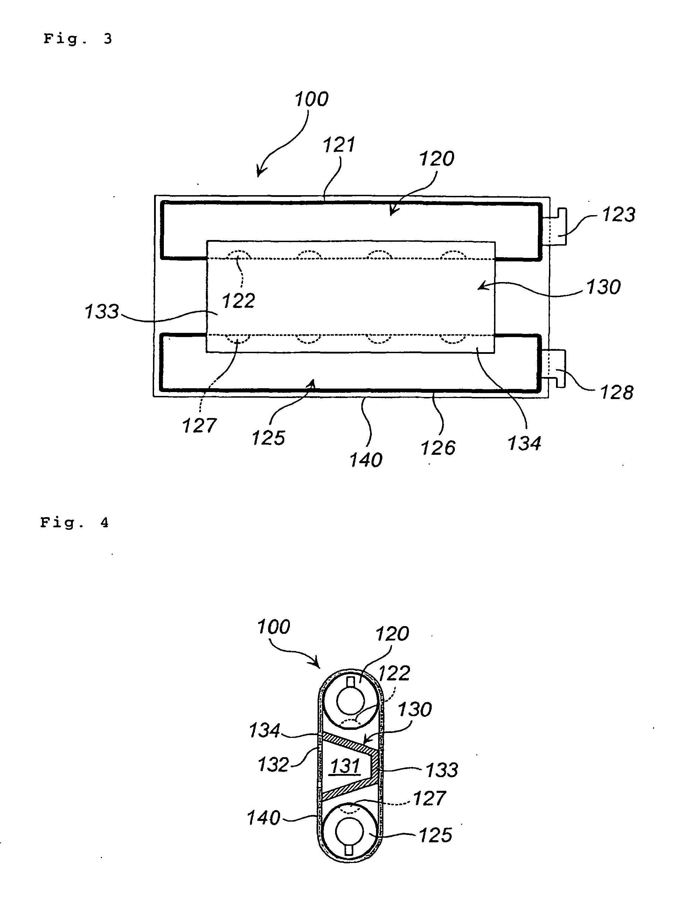

### (2) Multi-stage gas generator of Figs. 3, 4

Fig. 3 is a plan view of a multi-stage gas generator 100 for an air bag (note, however, that a ceiling portion thereof has been removed so that the interior is visible), and Fig. 4 is a side view of Fig. 3.

A first gas generator 120 has a first inside housing 121 serving as an outer shell container, and a plurality of first inside gas discharge ports 122 are provided in the first inside housing 121. An ignition device 123 including an igniter and a transfer charge is accommodated in the interior of the first inside housing 121 together with a gas generating agent.

A second gas generator 125 has a second inside housing 126 serving as an outer shell container, and a plurality of second inside gas discharge ports 127 are provided in the second inside housing 126. An ignition device 128 including an igniter and a transfer charge is accommodated in the interior of the second inside housing 126 together with a gas generating agent.

Gas generators having well-known structures and functions (with no filter in the interior thereof or with the filter removed) may be used as the first gas generator 120 and second gas generator 125. Further, each gas generator has a single ignition device, and one or two or more combustion chambers may be provided.

A filter 130 with a V-shaped sectional form in the width direction, having a function for cooling and filtering the high-temperature gas that is generated through combustion of the gas generating agent, is disposed between the first gas generator 120 and second gas generator 125.

The first gas generator 120, second gas generator 125, and V-shaped filter 130 are surrounded by an outside housing 140. A bottom portion 133 of the V-shaped filter 130 abuts against the bottom surface of the outside housing 140, while end portions 134 of the side faces of the V shape abuts against the ceiling surface of the outside housing 140, and thus a space 131 is formed by the V-shaped filter 130 and the ceiling surface of the outside housing 140. An outside gas discharge port 132 is provided in the ceiling surface of the outside housing 140 forming the space 131. One or more outside gas discharge ports 132 may be provided, and to ensure moisture resistance, the outside gas discharge port 132 is preferably sealed by sealing tape.

A sectional form of the first inside housing 121 and second inside housing 126 in the width direction is circular, while a sectional form of the outside housing 140 in the width direction is elliptical. As shown in the drawings, a half arc of the first inside housing 121 and second inside housing 126 matches the arc part of the outside housing 140 in both shape and size.

The first inside housing 121 and second inside housing 126 are sufficiently pressure resistant to be able to withstand the pressure increase generated upon activation of the multi-stage gas generator 100. On the other hand, the pressure resistance of the outside housing 140 is lower than that of the two inside housings, and it is acceptable for the outside housing 140 to be deformed by the pressure increase generated upon activation of the multi-stage gas generator 100, provided that gas discharge through the outside gas discharge port 132 is not obstructed.

In the multi-stage gas generator 100 for an air bag shown in Figs. 3 and 4, the relationship (numerical value range) between the maximum pressure received upon activation and the strength of the first inside housing 121, second inside housing 126, and outside housing 140, and also the material of the housings, are identical to those of the multi-stage gas generator 10 for an air bag shown in Figs. 1 and 2.

Next, an operation of an air bag system incorporated with the multi-stage gas generator 100 will be described with reference to Figs. 3 and 4. Depending on the manner of the vehicle collision, the two gas generators are activated in three patterns: simultaneous activation; activation of the first gas generator 120 first and the second gas generator 125 at a delay; and activation of the first gas generator 120 alone (note, however, that for safety purposes during demolition of the vehicle, the second gas generator 125 is also activated at a timing that does not contribute to air bag inflation). The simultaneous activation pattern will be described below.

In the air bag system, the multi-stage gas generator 100 is accommodated in a module case together with an air bag and disposed in a predetermined position within the vehicle. In this case, the shape of the module case is limited by the restrictions of the disposal location, but in this embodiment, the exterior shape of the multi-stage gas generator 100 can be matched to the interior shape of the module case, thereby eliminating dead space, and hence corresponding reductions in size and weight can be achieved.

In the first gas generator 120 and second gas generator 125, when the respective ignition devices thereof are activated, the gas generating agent is ignited and burned, generating gas which is discharged through the first inside gas discharge ports 122 and second inside gas discharge ports 127. In this process, the internal pressure of the first inside housing 121 and second inside housing 126 rises high, but since the inside housings are highly pressure resistant, the two housings do not deform.

The combustion gas flows through the filter 130 into the space 131, and is discharged through the outside gas discharge port 132 to inflate the air bag. In this process, combustion gas enters the outside housing 140, but since the gas is quickly discharged through the outside gas discharge port 132, an excessive increase in the internal pressure is avoided. Moreover, even if the outside housing 140 deforms due to an increase in the internal pressure, the ceiling surface and bottom surface of the outside housing 140 are supported by the bottom portion 133 and the V shape side face end portions 134 of the filter 130, and therefore a gas discharge path to the outside gas discharge port 132 is secured.

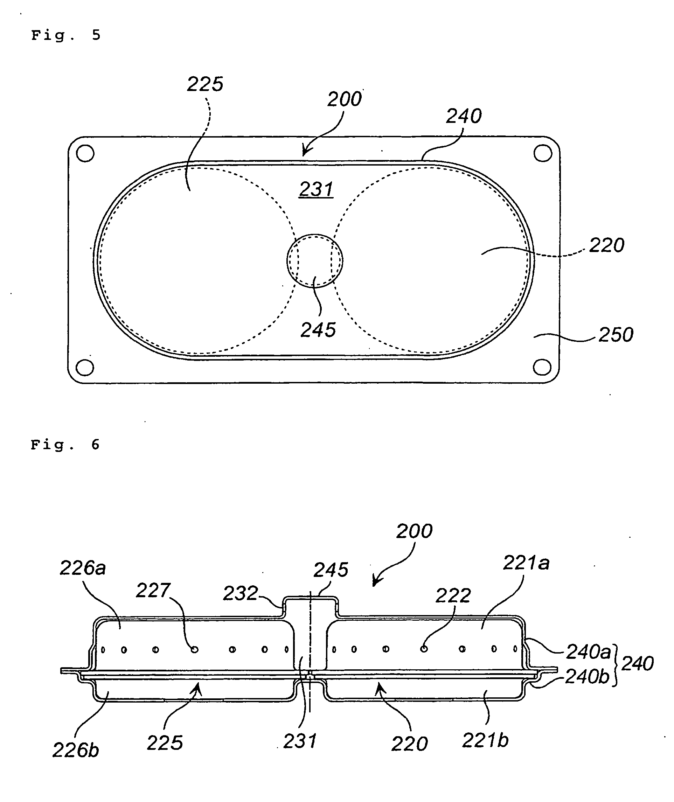

### (3) Multi-stage gas generator of Figs. 5, 6, 7

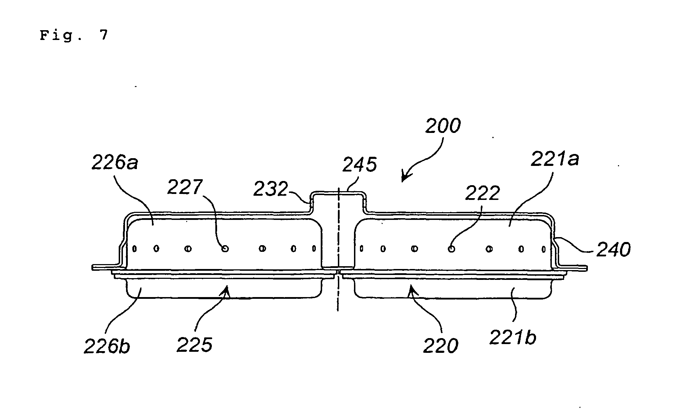

Fig. 5 is a plan view of a multi-stage gas generator 200 for an air bag (note, however, that a ceiling portion side thereof has been removed so that the interior is visible), Fig. 6 is a side view of Fig. 5 (with the side face side removed), and Fig. 7 is an axial sectional view of a gas generator in a different embodiment to that of Fig. 5 (with a part of the housing removed from the gas generator of Fig. 5). It is assumed that these gas generators use a gas generating agent as a gas source.

A first gas generator 220 and a second gas generator 225 are accommodated in an outside housing 240 having an elliptical plane form. A filter is provided in the interior of both the first gas generator 220 and the second gas generator 225.

In the first gas generator 220, a first inside housing is formed of an upper inside housing 221a having a plurality of first inside gas discharge ports 222, and a lower inside housing 221b. In the second gas generator 225, a second inside housing is formed of an upper housing 226a having a plurality of second inside gas discharge ports 227, and a lower housing 226b.

The outside housing 240 is formed by combining an upper outside housing 240a and a lower outside housing 240b and welding the upper outside housing 240a and lower housing 240b to each other at a joint portion. A diffuser portion 245 formed in a protruding form is provided in a central portion of the outside housing 240, and a plurality of outside gas discharge ports 232 are provided in the periphery of the diffuser portion 245.

Fig. 7 shows an embodiment in which the lower outside housing 240b is absent from the multi-stage gas generator 200 of Figs. 5, 6, but is otherwise identical to Figs. 5, 6.

In the multi-stage gas generator 200 for an air bag shown in Figs. 5 to 7, the relationship (numerical value range) between the maximum pressure received upon activation and the strength of the first inside housing 221, second inside housing 226, and outside housing 240, and also the material of the housings, are identical to those of the multi-stage gas generator 10 for an air bag shown in Figs. 1 and 2.

In this embodiment, a generally used gas generator including a filter in its interior (for example, the gas generator shown in Fig. 1 and so on of JP-A No. 10-95302) may be adopted as the first gas generator 220 and second gas generator 225, and therefore manufacture is simple.

Next, an operation of an air bag system incorporated with the multi-stage gas generator 200 will be described with reference to Figs. 5 and 6.

In the air bag system, the multi-stage gas generator 200 is accommodated in a module case 250 (illustrated with the front surface side thereof removed) together with an air bag and disposed in a predetermined position within the vehicle. In this case, the shape of the module case 250 is limited by the restrictions of the disposal location, but in this embodiment, the exterior shape of the multi-stage gas generator 200 can be matched to the interior shape of the module case 250, thereby eliminating dead space, and hence corresponding reductions in size and weight can be achieved.

In the first gas generator 220 and second gas generator 225, when the respective ignition devices thereof are activated, the gas generating agent is ignited and burned, generating gas which is discharged through the first inside gas discharge ports 222 and second inside gas discharge ports 227. In this process, the internal pressure of the first inside housing (221a, 221b) and second inside housing (226a, 226b) rises high, but since the inside housings are highly pressure resistant, the two housings do not deform.

After flowing into a space 231, the combustion gas is discharged through the outside gas discharge ports 232 to inflate the air bag. In this process, combustion gas enters the outside housing 240, but since the gas is quickly discharged through the outside gas discharge ports 232, an excessive increase in the internal pressure is avoided.

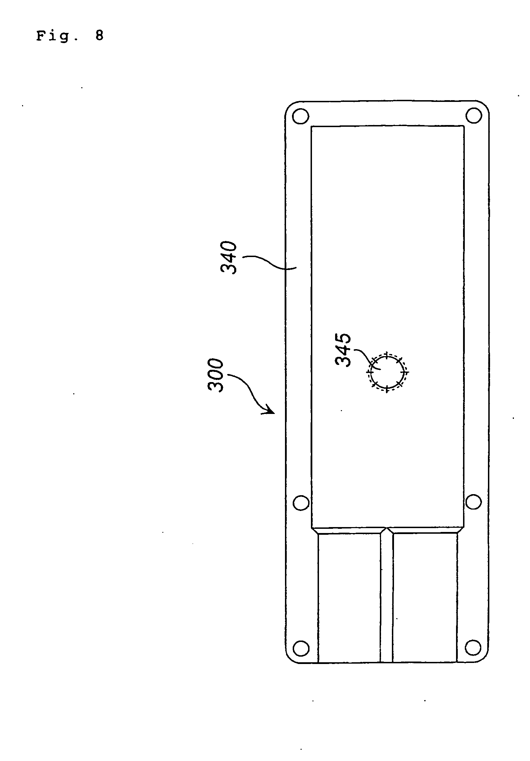

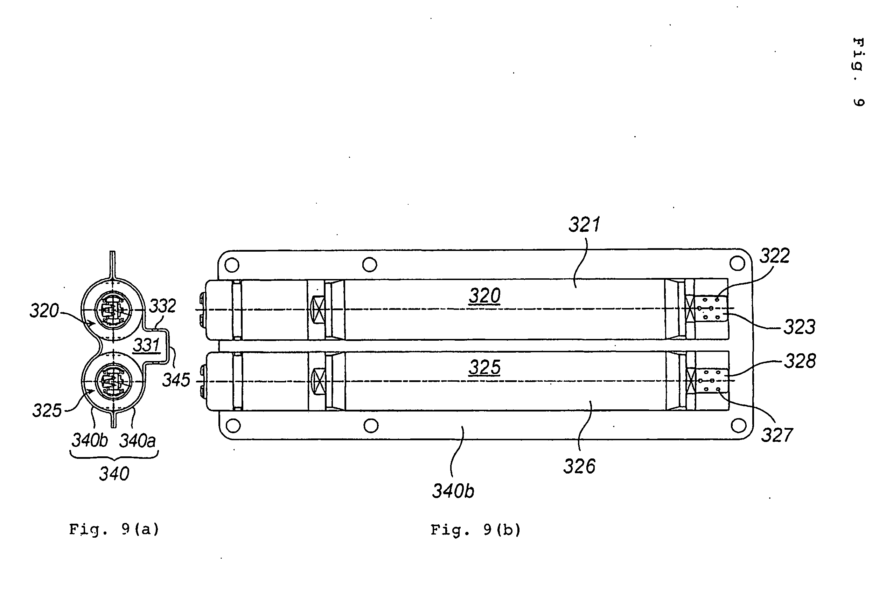

### (4) Multi-stage gas generator of Figs. 8, 9

Fig. 8 is a plan view of a multi-stage gas generator for an air bag, Fig. 9(a) is a side view of Fig. 8, and Fig. 9(b) shows a state in which a housing on a ceiling surface side has been removed from Fig. 8. The drawings illustrate a hybrid inflator using gas (inert gas, nitrogen gas or the like) charged at high pressure as the gas source.

A first inflator 320 and a second inflator 325 are accommodated in an outside housing 340 having a rectangular plane form.

In the first inflator 320, a first inside diffuser portion 323 is provided at one end portion side of a first inside housing 321, and a plurality of first inside gas discharge ports 322 are provided in the first inside diffuser portion 323.

In the second inflator 325, a second inside diffuser portion 328 is provided at one end portion side of a second inside housing 326, and a plurality of second inside gas discharge ports 327 are provided in the second inside diffuser portion 328.

The outside housing 340 is formed by combining an upper outside housing 340a and a lower outside housing 340b and welding the upper outside housing 340a and lower outside housing 340b to each other at a joint portion. A diffuser portion 345 formed in a protruding form is provided in a central portion of the outside housing 340, and a plurality of outside gas discharge ports 332 is provided in the periphery of the diffuser portion 345.

In the multi-stage gas generator 300 for an air bag shown in Figs. 8 and 9, the first inside housing 321 and second inside housing 326 have great strength so that high-pressure gas can be charged therein, and hence the difference in strength between the first and second inside housings 321, 326 and the outside housing 340 is extremely large. There are no particular limitations on the material used for the inside housings and outside housing, and as long as the desired strengths are satisfied, a well-known material such as iron, aluminum, stainless steel, synthetic resin, and so on may be selected.

In this embodiment, a generally used hybrid inflator (for example, the hybrid inflator shown in Figs. 1 to 12 and so on of JP-A No. 2003-226222) may be adopted as the first inflator 320 and second inflator 325, and therefore manufacture is simple.

Next, an operation of an air bag system incorporated with the multi-stage gas generator 300 will be described with reference to Figs. 8 and 9.

In the air bag system, the multi-stage gas generator 300 is housed in a module case together with an air bag and disposed in a predetermined position within the vehicle. In this case, the shape of the module case is limited by the restrictions of the disposal location, but in this embodiment, the exterior shape of the multi-stage gas generator 300 can be matched to the interior shape of the module case, thereby eliminating dead space, and hence corresponding reductions in size and weight can be achieved.

In the first gas generator 320 and second gas generator 325,when the respective ignition devices thereof are activated, a blocking device (a rupturable plate) sealing in the high-pressure gas ruptures, and as a result, the gas is discharged through the first inside gas discharge ports 322 and second inside gas discharge ports 327.

After flowing into a space 331, the combustion gas is discharged through the outside gas discharge ports 332 to inflate the air bag. In this process, gas enters the outside housing 340, but since the gas is quickly discharged through the outside gas discharge ports 332, an excessive increase in the internal pressure is avoided.

## Claims

1. A multi-stage gas generator for an air bag, comprising:
a plurality of gas generators each having an inside housing provided with an inside gas discharge port as an outer shell container,
a filter disposed on the exterior of the plurality of gas generators and
an outside housing of a desired shape surrounding the plurality of gas generators and the filter and being provided with an outside gas discharge port, **characterized in that**
the pressure resistance of the inside housing being greater than the pressure resistance of the outside housing,
gas discharged through the inside gas discharge port of the inside housing upon activation of the multi-stage gas generator, passing through the filter, then being discharged through the outside gas discharge port of the outside housing to inflate the air bag.

2. The multi-stage gas generator for an air bag according to claim 1, wherein the shape of the outside housing may be modified in accordance with the shape of a module case for accommodating the multi-stage gas generator for an air bag.

3. The multi-stage gas generator for an air bag according to claim 1 or 2, wherein the maximum pressure received by the inside housing upon activation of the multi-stage gas generator for an air bag is between 3 and 120MPa, and the strength of the inside housing is between 4.5 and 180MPa, and
the maximum pressure received by the outside housing upon activation of the multi-stage gas generator for an air bag is between 0.1 and 5MPa, and the strength of the outside housing is between 0.15 and 7.5MPa.

4. The multi-stage gas generator for an air bag according to claim 1 or 2, wherein the plurality of gas generators comprises at least one of a gas generating agent and a pressurized gas as a gas generating source.

## Patentansprüche

1. Mehrstufiger Gasgenerator für einen Airbag, der umfasst:
eine Vielzahl von Gasgeneratoren, die jeweils ein inneres Gehäuse, das mit einer inneren Gasausstoßöffnung versehen ist, als einen Außenhüllenbehälter aufweisen,
einen Filter, der an der Außenseite der Vielzahl von Gasgeneratoren angeordnet ist, und
ein Außengehäuse einer gewünschten Form, das die Vielzahl von Gasgeneratoren und den Filter umgibt und mit einer Außen-Gasausstoßöffnung versehen ist,
**dadurch gekennzeichnet, dass**
der Druckwiderstand des inneren Gehäuses größer ist als der Druckwiderstand des äußeren Gehäuses,
Gas, das über die innere Gasausstoßöffnung des inneren Gehäuses bei Aktivierung des mehrstufigen Gasgenerators ausgestoßen wird, durch den Filter hindurchtritt und dann über die äußere Gasausstoßöffnung des äußeren Gehäuses ausgestoßen wird, um den Airbag aufzublasen.

2. Mehrstufiger Gasgenerator für einen Airbag nach Anspruch 1, wobei die Form des äußeren Gehäuses gemäß der Form einer Modulkapsel zum Aufnehmen des mehrstufigen Gasgenerators für einen Airbag modifiziert werden kann.

3. Mehrstufiger Gasgenerator für einen Airbag nach Anspruch 1 oder 2, wobei der maximale Druck, der durch das innere Gehäuse bei Aktivierung des mehrstufigen Gasgenerators für einen Airbag aufgenommen wird, zwischen 3 und 120 MPa beträgt und die Festigkeit des inneren Gehäuses zwischen 4,5 und 180 MPa beträgt, und
der maximale Druck, der durch das äußere Gehäuse bei Aktivierung des mehrstufigen Gasgenerators für einen Airbag aufgenommen wird, zwischen 0,1 und 5 MPa beträgt und die Festigkeit des äußeren Gehäuses zwischen 0,15 und 7,5 MPa beträgt.

4. Mehrstufiger Gasgenerator für einen Airbag nach Anspruch 1 oder 2, wobei die Vielzahl von Gasgeneratoren wenigstens ein Gaserzeugungsmittel und ein unter Druck stehendes Gas als eine Gaserzeugungsquelle umfassen.

## Revendications

1. Générateur de gaz multi-étages pour coussin de sécurité gonflable comprenant :
une pluralité de générateurs de gaz muni chacun d'un boîtier interne équipé d'un orifice de décharge de gaz interne comme conteneur périphérique,
un filtre disposé sur l'extérieur de la pluralité des générateurs de gaz, et
un boîtier externe de la forme désirée entourant la pluralité de générateurs de gaz et le filtre et étant équipé d'un orifice de décharge de gaz externe,
**caractérisé en ce que**
la résistance à la pression du boîtier interne est supérieure à la résistance à la pression du boîtier externe, **caractérisé en ce que**
le gaz déchargé par l'orifice de décharge de gaz interne du boîtier interne après activation du générateur de gaz multi-étages, traverse le filtre, puis est déchargé par l'orifice de décharge de gaz externe du boîtier externe pour gonfler le coussin de sécurité gonflable.

2. Générateur de gaz multi-étages pour coussin de sécurité gonflable selon la revendication 1, dans lequel la forme du boîtier externe peut être modifiée en fonction de la forme d'un module conçu pour abriter le générateur de gaz multi-étages pour coussin de sécurité gonflable.

3. Générateur de gaz multi-étages pour coussin de sécurité gonflable selon la revendication 1 ou 2, dans lequel la pression maximale subie par le boîtier interne après activation du générateur de gaz multi-étages pour coussin de sécurité gonflable est comprise entre 3 et 120 MPa et la résistance du boîtier interne est comprise entre 4,5 et 180 MP, et
la pression maximale subie par le boîtier externe après activation du générateur de gaz multi-étages pour coussin de sécurité gonflable est comprise entre 0,1 et 5 MPa et la résistance du boîtier externe est comprise entre 0,15 et 7,5 MPa.

4. Générateur de gaz multi-étages pour coussin de sécurité gonflable selon la revendication 1 ou 2, dans lequel la pluralité de générateurs de gaz comprend au moins l'un d'un agent générateur de gaz et un gaz comprimé comme source génératrice de gaz.
